Europäisches Patentamt

European Patent Office

Office européen des brevets

(19)

(11) Publication number: **0 061 272**

**A1**

(12) **EUROPEAN PATENT APPLICATION**

(21) Application number: **82301294.3**

(22) Date of filing: **15.03.82**

(51) Int. Cl.³: **H 02 K 5/167**
**F 16 C 33/12, C 23 C 11/18**

(30) Priority: **23.03.81 GB 8109048**

(43) Date of publication of application:
**29.09.82 Bulletin 82/39**

(84) Designated Contracting States:
**DE FR GB IT**

(71) Applicant: **LUCAS INDUSTRIES plc**
**Great King Street**
**Birmingham, B19 2XF(GB)**

(72) Inventor: **Timmis, John Peter**
**23 Allesley Close**
**Sutton Coldfield West Midlands(GB)**

(74) Representative: **Pearce, Anthony Richmond et al,**
**Marks & Clerk Alpha Tower ATV Centre**
**Birmingham B1 1TT(GB)**

(54) **Electric motor.**

(57) A simple and economically produced electric motor has a casing (11) defined by a stator assembly (12) and end caps (13) and containing a rotor assembly 14 including a rotor shaft (16). The shaft (16) is supported in bearings defined by sleeves (19) formed by a plunging operation on the end caps (13). The axial length of each sleeve (19) is only 0.125 to 0.500 of the diameter of the region of the shaft (16) received within the sleeve (19). This reduced axial length is permitted because the sleeves (19) and the shaft (16) have been gas nitrocarburized and preferably subsequently oxidised before being quenched to provide a porous epsilon iron nitride or carbonitride layer in which lubricating oil is absorbed.

FIG. I.

This invention relates to electric motors for use in road vehicles, the motors being primarily of the type used to power windscreen wiper systems, heater fans, toy motors of the kind used in childrens' toys and games, and the like. However, it is contemplated that the invention could be applied to high power motors such as starter motors.

In a known low power motor for powering eg. a windscreen wiper or cooling ventilating fan on a vehicle, the rotor shaft of the motor is supported in spaced bearings carried by axially opposite  end caps of the motor casing. The bearing at one end of the shaft is defined by a sintered metal sleeve secured to the one end cap of the casing, and in view of the radial loading which must be accepted by that bearing, its axial length in many cases exceeds the diameter of the rotor shaft. The use of a long bearing at one end of the shaft gives rise to alignment problems when the bearing at the other end of the shaft is assembled. For this reason it is usual to choose a self aligning (spherically mounted) bearing for the second bearing of the shaft. Thus not only do the bearings of the shaft take up a significant length, they are additionally expensive in that the self aligning bearing is a costly component, as, to a lesser extent, is the axially long sintered bearing. Moreover, owing to the large bearing surface arising from the use of an axially long sintered bearing a large volume of oil is required for lubrication. While the sintered bearing itself can absorb a significant quantity of oil, it is normally necessary to provide a back-upreservoir in association with the bearing.   Frequently such a reservoir is provided by means of a pad or sleeve of oil impregnated absorbent material in contact with the bearing.

It is an object of the present invention to provide a low power motor in a simple, economic, and convenient form wherein the aforementioned problems are minimised.

An electric motor according to the present invention includes a rotor shaft supported for rotation relative to a stator assembly of the motor by a pair of spaced and axially aligned bearings, each bearing being in the form of a steel sleeve-like member having an axial length in the range 0.125D to 0.500D where D is the diameter of the region of the rotor shaft received within the bearing, said steel sleeve-like members and at least those regions of the rotor shaft received within the members having been subjected to the heat treatment operation known as nitrocarburizing to produce a porous layer having improved wear resistance, and the pores of said layer of said members and said regions of the shaft being impregnated with lubricating oil.

Preferably, said porous layer comprises epsilon iron nitride or carbonitride whose outer surface region has been oxidized ie is oxide rich.

Most advantageously, such a porous layer is one formed by subjecting the members and said regions of the rotor shaft to a gas phase nitro carburizing heat treatment process to form a lower layer comprising nitrogen in solid solution in a ferritic matrix as well as the porous layer which, overlies the lower layer, exposing the members and shaft to an oxidizing medium e.g. air, and then quenching to retain the nitrogen in solid solution.

Preferably, the quenching is effected in a quenching medium containing oil, more preferably an oil/water mixture, so that the porous layer becomes impregnated with oil. Conveniently, the heat treatment and subsequent oxidation and quenching is effected in the manner described in our
copending British Patent Application Nos. 8131133 and
8138318 filed on 15 October and 18 December, 1981,
respectively.

Preferably, said shaft and said sleeve-like members are
formed from low-carbon non-alloy steel.

Preferably, the length of said members is 0.250D.

Preferably, said sleeve-like members are integral with the
end caps respectively of a casing of the motor.

Desirably, said sleeve-like members are formed as integral
parts of pressed steel end caps of the casing by means of a
plunging operation performed on the end caps.


One example of the invention is illustrated in the
accompanying drawings, wherein:-

Figure 1 is a diagrammatic cross-sectional representation
of a low-power motor,

Figure 2 is a cross-sectional view to an enlarged scale of
one of the bearings of the motor of Figure 1, and

Figure 3 is a view in the direction of arrow A in Figure
2.

Referring to the drawings, the motor includes a casing 11
defined by a stator assembly 12 and end caps 13. The stator
assembly 12 comprises a cylindrical mild steel yoke and a
plurality of permanent magnets equi-angularly spaced around
the yoke.

Rotatable within the stator assembly 12 is a rotor assembly 14 including a wound rotor 15 carried by a low carbon non-alloy steel rotor shaft 16. Intermediate the rotor 15 and one of the end caps 13 the shaft 16 carries a commutator 17 which coacts with a brush assembly 18 carried by the stator assembly 12. The commutator 17 and the brush assembly 18 provide the electrical connections between an external direct current supply and the wound rotor 15 so that the rotor assembly 14 rotates when electric current is passed through the wound rotor 15.

The end caps 13 of the casing 11 are identical, and each is formed as a pressing from a sheet of low carbon non-alloy steel. The end caps 13 are each of generally disc like form having a central plunged aperture. The plunging of the central aperture provides a centrally disposed sleeve 19 projecting from one face of each of the end caps 13. The sleeves 19 are of circular cross-section, and have an internal diameter so related to the external diameter of the shaft 16 that a rotary bearing is provided where the shaft 16 passes through the sleeves 19. The assembly of the caps 13 to the stator assembly 12 is such as to ensure that the sleeves 19 are coaxial.

At least the sleeves 19 and the corresponding regions of the shaft 16 are subjected to a heat treatment process prior to assembly of the motor. In practice the whole of the end caps 13 and the whole of the shaft 16 will be subjected to the heat treatment process, which process provides a layer of epsilon iron nitride or carbonitride on the treated low carbon non-alloy steel having pores therein, and also having improved wear resistance properties. It is believed that at the present time the only heat treatment process which will produce such surface characteristics is that process known as nitrocarburizing. Nitrocarburizing is a known process, and in this respect attention is drawn to a paper entitled Heat Treatment 79 given at Birmingham England 22-24 May 1979 before "THE METAL SOCIETY/AMERICAN SOCIETY FOR METALS".This paper in the names of C.Dawes, D.F.Tranter and C.G.Smith explains the history and effects of the process.

In a preferred embodiment the end caps 13 and the shaft 26 are heat treated in a furnace for 2 hours at 570°C in an atmosphere containing 50% ammonia and 50% endothermic gas (carbon monoxide, carbon dioxide, nitrogen and hydrogen). After heat treatment, the end caps 13 and the shaft 16 are removed from the furnace and exposed to air for a short (time at least one second) before being quenched from a temperature such that a lower layer containing nitrogen in solid solution in a ferritic matrix is retained. It will be appreciated in this respect that the heat treatment process described above produces not only the epsilon iron nitride or carbonitride layer but also a lower layer in which nitrogen is in solid solution in a ferritic matrix. The nitrogen comes out of solid solution if cooling is effected too slowly with the result that the tensile strength and fatigue resistance properties are adversely affected. The exposure to air produces an oxide-rich surface region in the epsilon iron nitride or carbonitride layer. Quenching in this embodiment is effected in an oil-in-water emulsion. An example of a suitable emulsion is that produced by mixing 1 volume part of EVCOQUENCH GW (a quenching oil) with about 6 volume parts of water. The oil enters the pores of the porous nitrocarburized layer. If the quenching oil does not provide sufficient lubricating properties for the required end use it is within the scope of the present invention to quench into a conventional lubricating oil, or to quench into water dry the components and then immerse them in the lubricating oil, or to quench into the quenching oil medium, remove the quenching oil by vapour degreasing and then immerse in the lubricating oil.

The sleeves 19 thus constitute lubricated bearings
supporting the shaft 16. The heat treatment of the sleeves
19 provides a bearing of good load carrying capacity which
permits the axial length f the sleeves 19 to be
considerably shorter than that required of the previously
used sintered or similar sleeve like bearings. Thus, the
axial length of each of the sleeves 19 can lie within the
range of 1/8 to 1/2 of the diameter of the shaft 16.
The preferred axial length for the bearings defined by the
sleeves 19 is 1/4 of the diameter of the shaft 16.

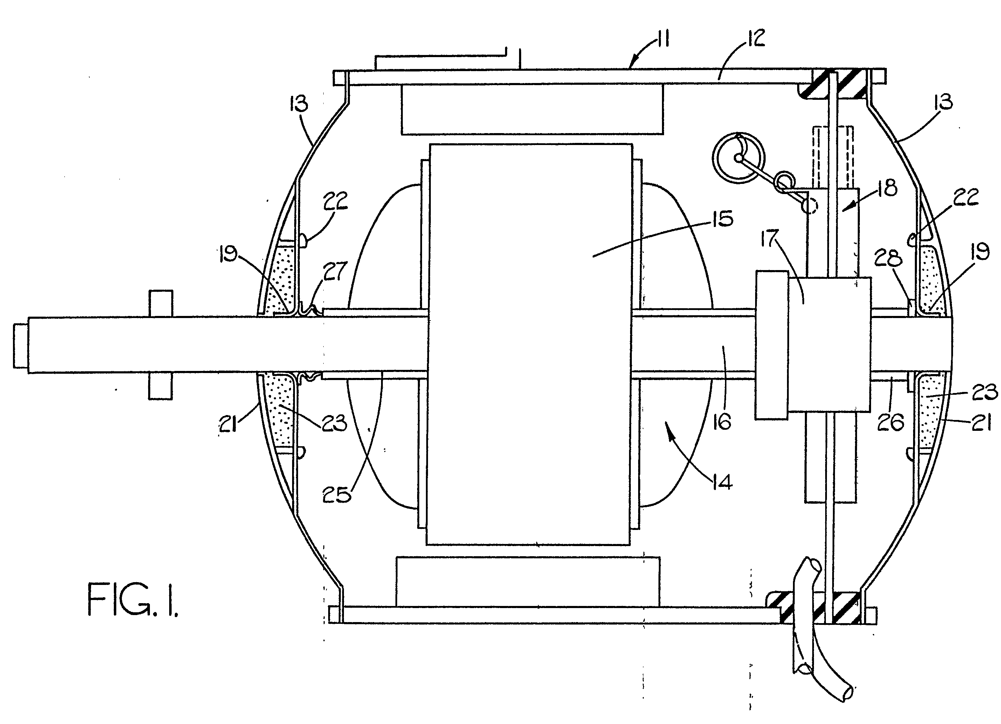

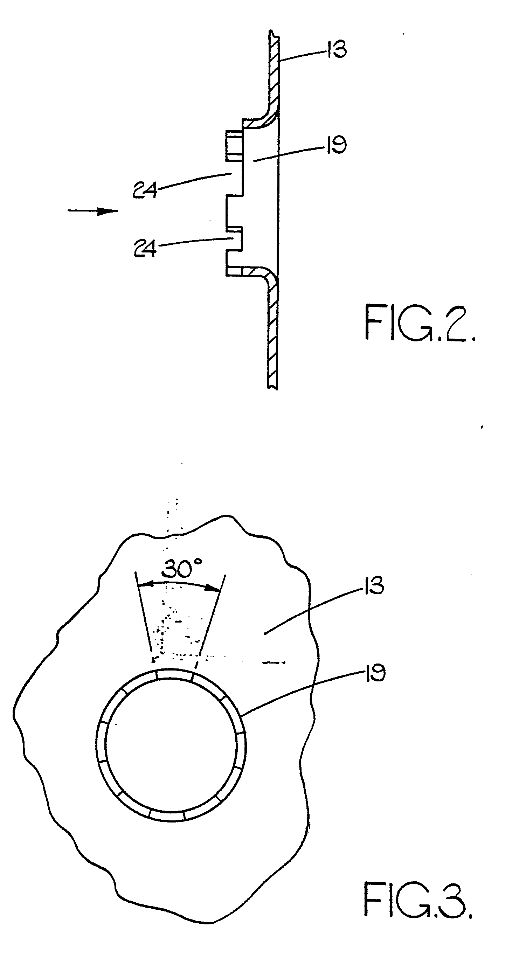

As is clear from Figure 1 the end caps 13 are generally
domed, but have flattened central regions from which the
sleeves 19 project. Associated with each end cap 13 is a
domed plastic cover 21 which has resilient barbed legs 22
extending through apertures in the end cap 13 to retain the
cover in position on the exterior of the end cap 13. The
covers 21 are apertured to permit the shaft 16 to extend
therethrough, and each cover 21 defines an enclosure with
its respective end cap 13 within which is received
absorbent material 23 impregnated with lubricating oil and
providing a lubricating oil reservoir surrounding the
respective sleeve. In order to assist the lubricating oil
from the material 23 reaching the bearing surface of each
sleeve 19 and the shaft 16 the sleeves 19 are provided with
apertures. The sleeves 19 may be undrilled but, can be
provided with radial drillings. The free ends of the
sleeves may be plain ie unrecessed, but it is preferred,
for the purpose of facilitating lubrication, for the free
ends of the sleeves 19 to have undulations or serrations
eg castellations (as shown in Figs. 2 and 3) instead of or
in addition to providing the radial drillings therein.The
axially extending notches 24 of the castellated end of each
sleeve 19 provide access for a seepage of oil from the
material 23 into the bearing. It will of course be
recognised that the necessary accuracy of alignment of the bearing sleeves 19 and the shaft 16 is less critical than
with the previously utilised bearings of much greater axial
length.

A spacer collar 26 and a thrust washer 28 through which the
shaft 16 extends serve to space the commutator 17 and
therefore the remainder or the rotor assembly, in relation
to the right hand (in Figure 1) end cap 13. The collar 26,
thrust washer 28 and the end cap 13 thus define a thrust
bearing. A similar spacer collar 25 encircles the shaft 16
between the rotor 15 and loaded in a direction to engage
the collar 26 with the end bracket 13 by means of a
resilient member 27 interposed between the collar 25 and
the adjacent end cap 13. The   member 27 can be a
corrugated metal sleeve, or alternatively can be a
similarly corrugated synthetic resin sleeve.

While it is preferable for the sleeves 19 to be integral
parts of the end caps 13 it is to be recognised that the
sleeves 19 could be formed separately from the end caps 13,
and could then be secured thereto in any convenient manner.
Such an arrangement would have the advantage that only the
sleeves 19 would require the heat treatment.

## CLAIMS

1. An electric motor including a rotor shaft (16) supported for rotation relative to a stator assembly (12) of the motor by a pair of spaced and axially aligned bearings, characterised in that each bearing is in the form of a steel sleeve-like member (19) having an axial length in the range 0.125D to 0.500D where D is the diameter of the region of the rotor shaft received within the bearing, said steel sleeve-like members (19) and at least those regions of the rotor shaft (16) received within the members (19) having been subjected to the heat treatment operation known as nitrocarburizing to produce a porous layer having improved wear resistance, and the pores of said layer of said members (19) and said regions of the shaft (16) being impregnated with lubricating oil.

2. An electric motor as claimed in claim 1, characterised in that said porous layer comprises epsilon iron nitride or carbonitride whose outer surface region has been oxidized.

3. An electric motor as claimed in claim 2, characterised in that said porous layer is one which has been formed by (a) subjecting the members (19) and regions of the shaft (16) to a gas phase nitrocarburizing heat treatment process to form a lower layer comprising nitrogen in solid solution in a ferritic matrix as well as the porous layer which overlies the lower layer, (b) exposing the members (19) and said region of the shaft (16) to an oxidizing medium, and (c) quenching to retain the nitrogen in solid solution.

**0061272**

4. An electric motor as claimed in any preceding claim, characterised in that said shaft (16) and said members (19) are formed from low carbon, non-alloy steel.

5. An electric motor as claimed in any preceding claim, characterized in that the length of said members (19) is 0.250D.

6. An electric motor as claimed in any preceding, claim, characterised in that said members (19) are integral with end caps (13) of a casing (11) of the motor.

7. An electric motor as claimed in claim 6, characterised in that said members (19) are formed as integral parts of the end caps (13) by means of a plunging operation performed on the latter.

8. An electric motor as claimed in any preceding claim, characterised in that each member (19) is provided with surrounding lubricating oil reservoir (23).

9. An electric motor as claimed in claim 8, characterised in that each sleeve-like member (19) has an end having notches or recesses therein to facilitate lubricating oil access.

FIG.I.

FIG.2.

30°

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 034 157 (GENERAL MOTORS) *Page 1, lines 21-86; pages 2,3; page 4, lines 1-123; figures 1-3* | 1-3 | H 02 K 5/167<br>F 16 C 33/12<br>C 23 C 11/18 |
| A | US-A-2 781 464 (TIMMS) *Column 2, lines 42-61; figures 2,3* | 1,5 | |
| A | DE-B-1 663 075 (SIEMENS) *Column 2, lines 8-68; column 3, lines 1-23; figures 1-7* | 1,4,6-8 | |
| A | DE-A-2 228 746 (STATNI) *Page 2, lines 10-15; page 8, lines 2-20* | 1-3 | |
| A | MACHINERY AND PRODUCTION ENGINEERING, vol. 128, no. 3311, 26th May 1976, pages 489-492, Burgess Hill (USA); T.L.ELLIOTT: "Ferritic nitrocarburising". *Page 489, left-hand column, paragraphs 2-3; page 489, right-hand column, paragraphs 1,2* | 3 | TECHNICAL FIELDS SEARCHED (Int. Cl. ³)<br><br>H 02 K<br>F 16 C<br>C 23 C |
| A | US-A-3 514 168 (OTTO) *Column 3, lines 28-56; figures 1-3* | 9 | |

The present search report has been drawn up for all claims

| Place of search | Date of completion of the search | Examiner |
|---|---|---|
| THE HAGUE | 24-06-1982 | TIO K.H. |